# EUROPEAN PATENT APPLICATION

(11) **EP 2 492 995 A1**
(43) Date of publication of application: **29.08.2012**
(21) Application number: 10824610.9
(22) Date of filing: 04.10.2010
(51) Int. Cl.: H01M 4/48, H01M 4/36, C01B 33/113

(54) **NEGATIVE ELECTRODE ACTIVE MATERIAL FOR LITHIUM ION SECONDARY BATTERY**

(30) Priority: 22.10.2009 JP 2009243313
(71) Applicant: OSAKA Titanium Technologies Co., Ltd., Amagasaki-shi Hyogo 660-8533 (JP)
(72) Inventor: KANNO, Hideaki, Amagasaki-shi Hyogo 660-8533 (JP); KIZAKI, Shingo, Amagasaki-shi Hyogo 660-8533 (JP)
(74) Representative: Simons, Amanda Louise
(86) International application number: PCT/JP2010/005928
(87) International publication number: WO 2011/048756

(57) **Abstract**

Provided is a negative electrode active material for a lithium-ion secondary battery, comprising SiOₓ that has an intensity ratio A₁/A₂ of 0.1 or less in spectra measured by a Fourier transform infrared spectrometer after subjecting the SiOₓ to evacuation treatment at 200°C, given that A₁ designates an intensity of a silanol group-derived peak which appears around 3400 to 3800 cm⁻¹, and A₂ designates an intensity of a siloxane bond-derived peak which appears around 1000 to 1200 cm⁻¹. It is preferred that x in the SiOₓ satisfies x<1; there is no sign of an Si-H bond-derived peak A₃ that may normally exhibit around 2100 cm⁻¹ in spectra of the SiOₓ measured by a laser Raman spectrometer; and a ratio Y/X is 0.98 or less, given that X is a mole ratio of O to Si in the whole body of the SiOₓ, and Y is a mole ratio of O to Si in a surface vicinity of the SiOₓ. A lithium-ion secondary battery having high initial efficiency and charge/discharge capacity can be obtained by using this active material.

## Description

### TECHNICAL FIELD

The present invention relates to a negative electrode active material which is used for a lithium-ion secondary battery having excellent initial efficiency and charge/discharge capacity.

### BACKGROUND ART

In accordance with recent noticeable developments in portable electronic equipments, communication equipments and the like, development of secondary batteries with high energy density is strongly sought after from the viewpoint of economic efficiency and reduction in size and weight of the equipment. As such a secondary battery with high energy density, a nickel-cadmium battery, a nickel-hydrogen battery, a lithium-ion secondary battery, a polymer battery and the like are currently used. Among these batteries, the demand for the lithium-ion secondary battery is strongly growing in the power source market by virtue of its dramatically enhanced life and capacity, compared with the nickel cadmium battery or nickel-hydrogen battery.

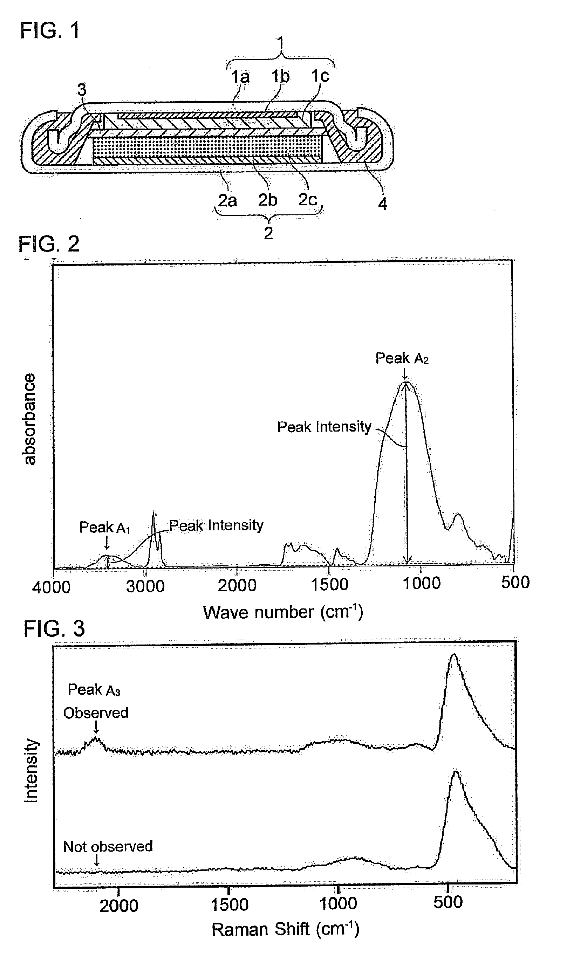

Fig. 1 is a view depicting a configuration example of a coin-shaped lithium-ion secondary battery. The lithium-ion secondary battery includes, as shown in Fig. 1, a positive electrode 1, a negative electrode 2, a separator 3 impregnated with electrolyte, and a gasket 4 that maintains the electric insulation between the positive electrode 1 and the negative electrode 2 and seals the battery content also. When charging or discharging is performed, lithium ions move back and forth between the positive electrode 1 and the negative electrode 2 through the electrolyte of the separator 3.

The positive electrode 1 includes a counter electrode case 1a, a counter electrode current collector 1b, and a counter electrode 1c, and lithium cobaltate (LiCoO₃) or manganese spinel (LiMn₂O₄) is mainly used for the counter electrode 1c. The negative electrode 2 includes a work electrode case 2a, a work electrode current collector 2b, and a work electrode 2c, and a negative electrode material used for the work electrode 2c is generally composed of an active material capable of occluding and releasing lithium ions (negative electrode active material), a conductive auxiliary, and a binder.

As such a negative electrode active material for a lithium-ion secondary battery, there have been proposed in the past a composite oxide of lithium and boron, a composite oxide of lithium and transition metal (V, Fe, Cr, Mo, Ni, etc.), a compound containing Si, Ge or Sn, nitrogen (N), and oxygen (O), a Si particle the surface of which is coated with a carbon layer by means of chemical vapor deposition, and the like.

However, each of these negative electrode active materials noticeably deteriorates due to generation of dendrite or a passivated compound on the electrode in association with repeated charging and discharging, or shows an increase in expansion or contraction at the time of occlusion and release of lithium ions, although it can improve the charge/discharge capacity to enhance the energy density. Therefore, in lithium-ion secondary batteries using these negative electrode active materials, the maintainability of discharge capacity for repeated charging and discharging (hereinafter referred to as "cycle characteristic") is insufficient. Further, the ratio of discharge capacity to charge capacity just after production (discharge capacity/charge capacity, hereinafter referred to as "initial efficiency") is also inadequate. Such low initial efficiency means that lithium ions injected to the negative electrode by initial charging after production are not sufficiently released at the time of discharging. Both the cycle characteristic and the initial efficiency are important battery design factors.

On the other hand, it is conventionally attempted to use SiOₓ (0<x≤2), such as SiO, as the negative electrode active material. The SiOₓ can be a negative electrode active material with increased effective charge capacity and discharge capacity (hereinafter collectively referred also to as "charge/discharge capacity"), since it is low (less noble) in electrode potential to lithium, and can reversibly occlude and release lithium ions without deterioration such as collapse of crystal structure or generation of irreversible substances, which results from the occlusion and release of lithium ions during charging and discharging. Therefore, the SiOₓ can be promising, by using it as the negative electrode active material, to provide a secondary battery high in voltage and energy density and also excellent in charge/discharge characteristic and cycle characteristic.

Particles of SiOₓ physically expand and contract by occlusion and release of lithium ions. Since the particle of SiOₓ is tore apart when this volume change is repeated, a number of repetitions of charging and discharging cause a decrease in charge/discharge capacity when the SiOₓ is used as a negative electrode active material of a secondary battery. Namely, the cycle characteristic of the lithium-ion secondary battery fully depends on the stability to volume change of the SiOₓ as the negative electrode active material.

In light of this problem, it is proposed in Patent Literature 1 to ensure a stable structure coping with the volume change associated with occlusion and release of lithium ions by dispersing fine crystals of Si in an Si compound such as SiO₂ Further, it is also proposed in Patent Literature 2 to cause an Si compound such as SiOₓ (0.05<x<1.95) to have a bond represented by Si-H or H-Si-H by substituting part of the compound by H.

### CITATION LIST

### PATENT LITERATURE

PATENT LITERATURE 1: Japanese Patent No. 4081676
PATENT LITERATURE 2: Japanese Patent Application Publication No. 2007-213825

### SUMMARY OF INVENTION

### TECHNICAL PROBLEM

In a Si compound proposed in Patent Literature 1, a siloxane bond (≡Si-O-Si≡) which reacts with a lithium ion exists in the proximity of Si as being the site where the lithium ion is occluded/released, particularly, in the surface of the Si compound. In a Si compound proposed in Patent Literature 2, a silanol group (Si-OH) which reacts with a lithium ion is generated according as an Si-H bond or H-Si-H bond is generated by substitution ofH.

In general, a silanol group is generated in a particle of SiOₓ (0<x≤2) in a powdery state. Although this mechanism is not clarified yet, it can be considered that when the particle of SiOₓ powders is exposed to open air, atmospheric moisture (water molecule) adsorbed thereby penetrates to the inside, and the water molecule reacts with Si to generate the silanol group in the surface and inside of the SiOₓ powder.

In a lithium-ion secondary battery using such a Si compound or a SiO₂ powder, the initial efficiency is low since lithium ions occluded by the Si compound are partially fixed to the siloxane bond or silanol group so as not to be released.

Further, in the Si compound proposed in Patent Literature 2, H is bonded to Si as being the site of occlusion/release of lithium ion, and accordingly, the amount of lithium ions that can be occluded or released gets smaller. Therefore, a lithium-ion secondary battery using this Si compound is low in charge/discharge capacity.

In view of these problems, the present invention has been made and has an object to provide a negative electrode active material to be used for a lithium-ion secondary battery having excellent initial efficiency and charge/discharge capacity.

### SOLUTION TO PROBLEM

In order to solve the above-mentioned problems, the present inventors made investigations on a method for improving the initial efficiency of lithium-ion secondary batteries using SiOₓ as a negative electrode active material. As a result, it was found that the initial efficiency can be improved by decreasing the siloxane bond and silanol group both of which fix lithium ions in the SiOₓ, compared with Si as the site of occlusion/release of lithium ion, and can be further improved particularly by reducing these bond and group in the surface of the SiOₓ.

Furthermore, it was found also that the less H as being bonded to Si as the site of occlusion/release of lithium ion, or the less the Si-H bond and H-Si-H bond, the larger the occlusion/release amount of lithium ions was, and the charge/discharge capacity of a lithium-ion secondary battery using this SiOₓ as the negative electrode active material consequently increased.

It was also clarified that the less oxygen (O) as being present in the vicinity of the surface of SiOₓ, the more the initial efficiency and charge/discharge capacity of a lithium-ion secondary battery using the SiOₓ as the negative electrode active material was improved. Particularly, when a ratio Y/X is 0.98 or less, given that X is a mole ratio O/Si in the whole body of SiOₓ, and Y is a mole ratio O/Si in a surface vicinity of the SiOₓ, the initial efficiency and charge/discharge capacity can be satisfactory values.

The present invention is achieved based on the above-mentioned findings, and the summaries lies in a negative electrode material for lithium-ion secondary battery to be described in the following (1) to (4).

(1) A negative electrode active material for a lithium-ion secondary battery, comprising SiOₓ that has an intensity ratio A₁/A₂ of 0.1 or less in spectra measured by a Fourier transform infrared spectrometer after subjecting the SiOₓ to evacuation treatment at 200°C, given that A₁ designates an intensity of a silanol group-derived peak which appears in 3400 to 3800 cm⁻¹, and A₂ designates an intensity of a siloxane bond-derived peak which appears in 1000 to 1200 cm⁻¹ (hereinafter referred to as "first active material").

(2) The negative electrode active material for a lithium-ion secondary battery according to (1), wherein x in the SiOₓ satisfies x<1 (hereinafter referred to as "second active material").

(3) The negative electrode active material for a lithium-ion secondary battery according to (1) or (2), wherein there is no sign of an Si-H bond-derived peak A₃ that may normally exhibit around 2100 cm⁻¹ in spectra of the SiOₓ measured by a laser Raman spectrometer (hereinafter referred to as "third active material").

(4) The negative electrode active material for a lithium-ion secondary battery according to any one of (1) to (3), wherein a ratio Y/X is 0.98 or less, given that X is a mole ratio O/Si in the whole body of the SiOₓ, and Y is a mole ratio O/Si in a surface vicinity of the SiOₓ (hereinafter referred to as "fourth active material").

### ADVANTAGEOUS EFFECTS OF INVENTION

A lithium-ion secondary battery having excellent initial efficiency and charge/discharge capacity can be obtained by using the negative electrode material for a lithium-ion secondary battery of the present invention.

### BRIEF DESCRIPTION OF DRAWINGS

[Fig. 1] Fig. 1 is a view depicting a configuration example of a coin-shaped lithium-ion secondary battery.
[Fig. 2] Fig. 2 shows an FT-IR spectrum of SiOₓ which is measured after subjecting the SiOₓ to evacuation treatment at 200°C.
[Fig. 3] Fig. 3 shows Raman spectra of SiOₓ, wherein an Si-H-derived peak A₃ is observed in one spectrum, and no peak A₃ is observed in the other.
[Fig. 4] Fig. 4 is a view depicting a configuration example of production equipment for SiOx.

### DESCRIPTION OF EMBODIMENTS

### 1. Negative Electrode Active Material for Lithium-Ion Secondary Battery of the Present Invention

The negative electrode active material for a lithium-ion secondary battery of the present invention is a "negative electrode active material for a lithium-ion secondary battery, comprising SiOₓ that has an intensity ratio A₁/A₂ of 0.1 or less in spectra measured by a Fourier transform infrared spectrometer after subjecting the SiOₓ to evacuation at 200°C, given that A₁ designates an intensity of a silanol group-derived peak which appears in 3400 to 3800 cm⁻¹, and A₂ designates an intensity of a siloxane bond-derived peak which appears in 1000 to 1200 cm⁻¹". The negative electrode active material for a lithium-ion secondary battery of the present invention can be used, for example, in a lithium-ion secondary battery shown in Fig. 1, as a negative electrode active material constituting a negative electrode material.

The range of x in SiOₓ which can be applied to the negative electrode active material for lithium-ion secondary battery of the present invention is 0<x<2 for the whole body including the surface and inside of the SiOₓ. The range of x in SiOₓ is preferably x<1. The reason is to sufficiently decrease the siloxane bond (≡Si-O-Si≡) that becomes the site of fixation of lithium ion in the SiOₓ.

Fig. 2 shows an FT-IR spectrum of SiOₓ which is measured after subjecting the SiOₓ to evacuation treatment at 200°C. In the SiOₓ of the present invention, the intensity ratio A₁/A₂ in FT-IR spectra measured using a Fourier transform infrared spectrometer after subjecting the SiOₓ to evacuation at 200°C is specified to be 0.1 or less, given that A₁ designates an intensity of a silanol group (Si-OH)-derived peak which appears in 3400 to 3800 cm⁻¹ and A₂ designates an intensity of a siloxane bond-derived peak which appears in 1000 to 1200 cm⁻¹. In Fig. 2, the intensity of each of the peak A1 and the peak A₂ corresponds to the height of the peak from which a background is removed.

The reason for specifying the A₁/A₂ to be 0.1 or less is to sufficiently decrease the silanol group in the SiOₓ as well as the siloxane bond by making the quantitative ratio of silanol group to siloxane bond in the SiOₓ to a specific value or less. The reason for performing the evacuation treatment at 200°C prior to the measurement of FT-IR spectra is to reduce the effect of moisture existing in the surface of the SiOₓ and in air around it.

Fig. 3 shows Raman spectra of SiOₓ, wherein an Si-H bond-derived peak A₃ is observed in one spectrum, and the peak A₃ is not observed in the other. In the negative electrode active material for a lithium-ion secondary battery of the present invention, it is preferred that the Si-H bond-derived peak A₃ does not exist around 2100 cm⁻¹ in spectra obtained by the laser Raman spectrometry. The reason for this is that since the amount of lithium ions that can be occluded/released is reduced by binding H with Si as being the site of occlusion/release of lithium ion, it is preferred to decrease the Si-H bond as much as possible.

In the negative electrode active material for a lithium-ion secondary battery of the present invention, it is preferred that the ratio Y/X is 0.98 or less, given that X is a mole ratio O/Si in the whole body of the SiOₓ, and Y is a mole ratio O/Si in a surface vicinity of the SiOₓ. The reason is as follows.

As described above, in the negative electrode active material for a lithium-ion secondary battery of the present invention, in order to increase Si as being the site of occlusion/release of lithium ion, the siloxane bond and silanol group to react with and fix lithium ions are decreased. However, when Y as being the surface mole ratio of O to Si in SiOₓ is larger than X as being the overall mole ratio of O to Si therein even if X is small, namely, when the amount of O in the surface is larger than that in the inside, lithium ions tend to react with O in the surface to precipitate lithium oxides. Therefore, the penetration of lithium ions into the SiOₓ decreases, and the SiOₓ cannot sufficiently exert the performance as the negative electrode active material for a lithium-ion secondary battery. Thus, the ratio Y/X is set to 0.98 or less to make the amount of O in the surface of the SiOₓ smaller than that in the inside, whereby satisfactory values of initial efficiency and charge/discharge capacity in a lithium-ion secondary battery can be secured.

The overall quantitative evaluation of SiOₓ can be performed, for example, by use of an oxygen-in-ceramic analyzer using a melt process under inert gas flow, and the quantitative evaluation of Si can be performed, for example, by use of an ICP emission spectrophotometer. The quantitative evaluations of O and Si in the surface vicinity of SiOₓ can be performed, for example, by use of an X-ray photoelectron spectrometer.

### 2. Method of Producing Negative Electrode Active Material for Lithium-Ion Secondary Battery of the Present Invention

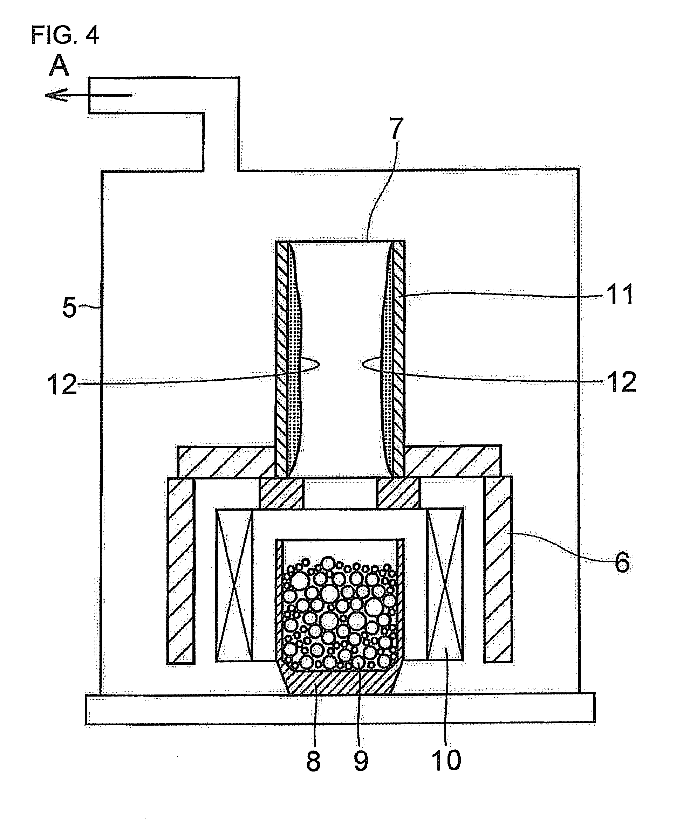

Fig. 4 is a view depicting a configuration example of production equipment for SiOₓ. This equipment includes a vacuum chamber 5, a raw material chamber 6 disposed inside the vacuum chamber 5, and a precipitation chamber 7 disposed above the raw material chamber 6.

The raw material chamber 6 is composed of a cylinder, and disposed at the central part thereof are a cylindrical raw material container 8 and a heating source 9 surrounding the raw material container 8.. As the heating source 9, for example, an electric heater can be used.

The precipitation chamber 7 is composed of a cylinder disposed coaxially with the raw material container 8. A precipitation substrate 11 made of stainless steel is provided on the inner periphery of the precipitation chamber 7 so as to deposit gaseous SiO generated by sublimation in the raw material chamber 6.

A vacuum device (not shown) for evacuating an atmospheric gas is connected to the vacuum chamber 5 that houses the raw material chamber 6 and the precipitation chamber 7 to discharge the gas in the direction of arrow A.

When SiOₓ is produced by use of the production equipment shown in Fig. 3, a mixed pelletized raw material 9 that is obtained by blending Si powders and SiO₂ powders as raw materials and mixing, pelletizing and drying the powders is used. This mixed pelletized raw material 9 is charged into the raw material container 8, and heated in inert gas atmosphere or vacuum to generate (sublimate) SiO. The gaseous SiO generated by sublimation ascends from the raw material chamber 6 into the precipitation chamber 7, in which it is deposited on the circumferential precipitation substrate 11, and precipitated as SiOₓ 12. Thereafter, the precipitated SiOₓ 12 is scraped off from the precipitation substrate 11, whereby a lump SiOₓ is obtained.

The lump SiOₓ thus obtained is pulverized, heated under H₂ atmosphere, and held under a decompressed atmosphere, whereby the negative electrode active material for a lithium-ion secondary battery of the present invention can be obtained. When the SiOₓ powder is heated under H₂ atmosphere, the siloxane bond is decomposed as shown in the following formula (1), generating an Si-H bond and a silanol group. Further, the SiOₓ is held under the decompressed atmosphere, whereby the Si-H bond and the silanol group are decomposed as shown in the following formula (2), generating an Si-Si bond that becomes the site of occlusion/release of lithium ion. The present inventors found that the silanol group is hardly generated in this SiOₓ powder in which this Si-Si bond is generated even if it adsorbs moisture upon exposure to open air.

(≡Si-O-Si≡)+H₂ → (≡Si-H HO-Si≡) (1)

(≡Si-H HO-Si≡) → (≡Si-Si≡)+H₂O (2)

### EXAMPLES

The following tests were performed to confirm the effects of the present invention, and the result thereof was evaluated.

### 1. Test Condition

Using a mixed pelletized raw material prepared by blending, mixing, pelletizing and drying Si powders and SiO₂ powders as raw materials, SiOₓ (0<x<2) was precipitated on a precipitation substrate by use of the above-mentioned equipment in Fig. 4. The precipitated SiOₓ was powdered through pulverization for 24 hours by use of an alumina-made ball mill. The resulting powders of SiOₓ were heated and held under various gas atmospheres, and some samples thereof were subjected to decompression treatment. In the decompression treatment, holding time in each Example was 4 hours. The treatment conditions of the powders of SiOₓ are shown in Table 1.

[TABLE 1]

**Table 1**

| Test No. | Classification | Production Condition | | | Physical Properties | | | | | Test Result | | Overall Evaluation |
|---|---|---|---|---|---|---|---|---|---|---|---|---|
| | | Atmosphere | Holding temperature [°C] | Decompression treatment time [h] | X**^{*1}** | Y**^{*2}** | Y/X | FT-IR | Raman Spectrum | Initial Efficiency [%] | Discharge Capacity [mAh/g] | |
| | | | | | | | | A₁/A₂ | A₃ peak | | | |
| 1 | Inventive Example | H₂ | 700 | 10 | 0.97 | 0.94 | 0.97 | 0.05 | Not observed | 79 | 1690 | ⊚ |
| 2 | Inventive Example | H₂ | 800 | 10 | 0.90 | 0.85 | 0.94 | 0.01 | Not observed | 81 | 1750 | ⊚ |
| 3 | Inventive Example | H₂ | 900 | 10 | 0.88 | 0.83 | 0.94 | 0.01 | Not observed | 88 | 1950 | ⊚ |
| 4 | Inventive Example | H₂ | 900 | 1 | 0.97 | 0.94 | 0.97 | 0.10 | Observed | 75 | 1510 | o |
| 5 | Comparative Example | H₂ | 900 | — | 0.99 | 0.98 | 0.99 | 0.40 | Observed | 70 | 1421 | × |
| 6 | Comparative Example | Ar | 900 | — | 1.02 | 1.02 | 1.00 | 0.20 | Not observed | 67 | 1200 | × |

| | | | | | | | | | | | | |
|---|---|---|---|---|---|---|---|---|---|---|---|---|
| *1 X: Overall mole ratio of O to Si in SiOₓ(O/Si) *2 Y: Surface mole ratio of O to Si in SiOₓ(O/Si) | | | | | | | | | | | | |

In regards to the SiOₓ powders after being subjected to heat treatment, the overall mole ratio X of O to Si, the surface mole ratio Y of O to Si, and the intensity ratio A₁/A₂ in FT-IR spectra, and whether the peak A₃ in Raman spectra is observed or not were examined. The results are shown in Table 1 as physical properties together with the treatment conditions.

The overall mole ratio X of O to Si in the SiOₓ powders was calculated based on the value of O which was quantitatively determined by use of an oxygen-in-ceramic analyzer using a melt process under inert gas flow and the value of Si which was quantitatively determined by use of an ICP emission spectrophotometer after the SiOₓ powders were transformed into the solution.

The surface mole ratio Y of O to Si in the SiOₓ powders was calculated based on the values of O and Si in a surface vicinity 20 to 80 nm from the surface of the powders, which were quantitatively determined respectively by means of X-ray photoelectron spectrometry.

The FT-IR spectra were obtained by use of a Fourier transform infrared spectrometer in measurement conditions of resolution capability of 4 cm⁻¹ and integration frequency of 500. The Raman spectra were obtained by use of a laser Raman spectrometer.

Test Nos. 1 to 4 are inventive examples, in which the value of x in SiOₓ (the overall mole ratio X of O to Si in SiOₓ powders) and the intensity ratio A₁/A₂ in FT-IR spectra, which is 0.1 or less, satisfied the specified value of the first active material and the second active material of the present invention. In Test Nos. 1 to 3 of the inventive examples, the A₃ peak did not appear in the Raman spectra, and the specified feature of the third active material of the present invention was also satisfied. In Test Nos. 1 to 4, the Y/X that is the ratio of the mole ratio Y to the mole ratio X is 0.98 or less, and the specified value of the fourth active material of the prevent invention was satisfied.

In each of Test Nos. 5 and 6 which are comparative examples, the intensity ratio of the A₁ peak to the A₂ peak in FT-IR spectra did not satisfy the specified value of the first active material of the present invention.

Each of these SiOₓ powders was used as a negative electrode active material, and carbon black as a conductive auxiliary and a binder were mixed thereto to produce a negative electrode material. The blending ratio of the raw materials of the negative electrode material was in the proportion of SiOₓ:carbon black:binder=7:2:1. A coin-shaped lithium-ion secondary battery shown in Fig. 1 was produced using this negative electrode material and Li metal as a positive electrode material, and was examined for initial efficiency and discharge capacity.

### 2. Test Result

Five lithium-ion secondary batteries using the negative electrode material produced in the above-mentioned conditions were produced for each test, and averages of initial efficiency and discharge capacity were obtained. These results were shown also in Table 1 together with treatment conditions and the like. In the same table, an overall evaluation is also shown.

As the initial efficiency, the ratio (discharge capacity/charge capacity) of initial discharge capacity to initial charge capacity after production of each lithium-ion secondary battery was adopted. As the discharge capacity, the initial discharge capacity after production was adopted.

The meaning of each sign in the overall evaluation is as follows. x means being poor, in which the average of initial efficiency is less than 75% or the average of discharge capacity is less than 1500 mAh/g; o means being satisfactory in which the average of initial efficiency is 75% or more, and the average of discharge capacity is 1500 mAh/g or more; and ⊚ means being excellent, in which the average of initial efficiency is 79% or more, and the average of discharge capacity is 1690 mAh/g or more.

The overall evaluation in each of the inventive examples was rated as ⊚ or o with satisfactory initial efficiency and discharge capacity. Among them, the overall evaluation was rated as ⊚ in Test Nos. 1 to 3 where no A₃ peak was observed in Raman spectra, and was o in Test No. 4 where the A₃ peak was observed.

On the other hand, in Test Nos. 5, 6 which are comparative examples, the overall evaluation was rated as x with low initial efficiency and discharge capacity. In Test No. 7, since the SiOₓ powders were heated under Ar atmosphere, the disproportionate reaction to decompose SiO into Si and SiO₂ as shown in the following formula (4) occurred, resulting in generation of SiO₂ which increases siloxane bonds (≡Si-O-Si≡) while causing the generation of Si as being the site of occlusion/release of lithium ion. Since the effect of the generation of SiO₂ is more serious than the effect of the generation of Si, the initial efficiency showed a low value in Test No. 7.

2SiO → Si+SiO₂ (4)

### INDUSTRIAL APPLICABILITY

A lithium-ion secondary battery having excellent initial efficiency and charge/discharge capacity can be obtained by using the negative electrode active material for a lithium-ion secondary battery of the present invention. Accordingly, the present invention involves a technology useful in the field of secondary batteries.

### REFERENCE SIGNS LIST

1: Positive electrode
1a: Counter electrode case
1b: Counter electrode current collector
1c: Counter electrode
2: Negative electrode
2a: Work electrode case
2b: Work electrode current collector
2c: Work electrode
3: Separator
4: Gasket
5: Vacuum chamber
6. Raw material chamber
7. Precipitation chamber
8. Raw material container
9: Mixed pelletized raw material
10: Heating source
11: Precipitation substrate
12: SiOₓ

## Claims

1. A negative electrode active material for lithium-ion secondary battery, **characterized by** comprising SiOₓ that has an intensity ratio A₁/A₂ of 0.1 or less in spectra measured by a Fourier transform infrared spectrometer after subjecting the SiOₓ to evacuation treatment at 200°C, given that A₁ designates an intensity of a silanol group-derived peak which appears in 3400 to 3800 cm⁻¹ and A₂ designates an intensity of a siloxane bond-derived peak which appears in 1000 to 1200 cm⁻¹

2. The negative electrode active material for a lithium-ion secondary battery according to claim 1, **characterized in that** x in the SiOₓ satisfies x<1.

3. The negative electrode active material for lithium-ion secondary battery according to claim 1 or 2, **characterized in that** there is no sign of an Si-H bond-derived peak A₃ that may normally exhibit around 2100 cm⁻¹ in spectra of the SiOₓ measured by a laser Raman spectrometer.

4. The negative electrode active material for a lithium-ion secondary battery according to any one of claims 1 to 3, **characterized in that** a ratio Y/X is 0.98 or less, given that X is a mole ratio O/Si in the whole body of the SiOₓ, and Y is a mole ratio O/Si in a surface vicinity of the SiOₓ.
